# FASCICULE DE BREVET EUROPEEN

(11) **EP 3 111 777 B1**
(45) Date de publication et mention de la délivrance du brevet: **14.03.2018**
(21) Numéro de dépôt: 16175862.8
(22) Date de dépôt: 23.06.2016
(51) Int. Cl.: A23L 3/10, A23B 7/00, B65B 25/00, B65B 31/02, B65B 55/02, A23B 4/00, A23L 3/00, B65B 7/28, B65B 55/14, B65B 63/08

(54) **PROCÉDÉ ET SYSTÈME DE CONDITIONNEMENT SOUS VIDE PROFOND D'UN PRODUIT ALIMENTAIRE SANS LIQUIDE DE COUVERTURE**
TIEFES VAKUUMVERPACKUNGSVERFAHREN UND -SYSTEM FÜR EIN LEBENSMITTELPRODUKT OHNE AUFGUSSFLÜSSIGKEIT
METHOD AND SYSTEM FOR DEEP-VACUUM PACKAGING OF A FOOD PRODUCT WITHOUT COVERING LIQUID

(30) Priorité: 30.06.2015 FR 1556120
(43) Date de publication de la demande: 04.01.2017
(73) Titulaire: Sodetech, 33260 La Teste de Buch (FR)
(72) Inventeur: LARROCHE, Jean, 47300 Pujols (FR); LARROCHE, Brigitte, 75020 Paris (FR)
(74) Mandataire: Ipside

(56) Documents cités:
- EP-A1- 0 404 543
- EP-A1- 2 226 252
- CN-A- 103 598 314
- FR-A- 1 434 926
- FR-A1- 2 686 059
- GB-A- 2 098 849
- US-A- 1 421 750
- US-A- 2 529 514
- US-A- 3 258 345

## Description

### ARRIERE-PLAN DE L'INVENTION

### Domaine de l'invention

La présente invention est du domaine de l'emballage, et plus particulièrement de l'emballage sous vide de denrées alimentaires en conteneur rigide.

Elle a pour objet un procédé et un système pour la fermeture sous vide d'un tel conteneur et la conservation sous vide de denrées alimentaires sans liquide de couverture. Elle a aussi pour objet un procédé pour la stérilisation ou la pasteurisation des denrées alimentaires emballées sous vide en tel conteneur.

### Arrière-plan technologique

Historiquement importantes, les pratiques d'appertisation sont progressivement remplacées pour partie par des procédés de surgélation dans l'industrie alimentaire, en lien avec les inconvénients organoleptiques et nutritionnels de l'appertisation qui, du fait de la présence de liquides de couverture importants dans les conteneurs, amènent à surcuire les aliments qu'on ne peut refroidir assez rapidement.

Dans l'état de l'art, les industriels réservent l'emballage métallique aux denrées alimentaires présentant peu ou pas de valeur ajoutée ou à celles dont le transport et la distribution imposent des méthodes de conservation plus grossières, notamment dans les pays où la chaîne du froid et de la surgélation est inexistante.

Des progrès ont néanmoins été faits avec l'emballage métallique sous vide, certes avec des niveaux de vide limités.

On connaît ainsi des méthodes de conservation de denrées alimentaires sous vide à l'intérieur de conteneurs rigides fermés par des couvercles, eux-mêmes rigides.

Cependant, des problèmes perdurent, tels que ceux liés à la fermeture du conteneur, à son comportement au moment de la stérilisation, à la médiocrité des qualités organoleptiques et nutritives obtenus pour les aliments, au poids important présenté par ces conteneurs après fermeture et lié à la présence d'un liquide de couverture ou encore à l'ouverture ultérieure de ces conteneurs, laquelle peut représenter un danger pour la santé de l'utilisateur final.

Selon des méthodes connues et couramment appliquées, le couvercle est fixé au débouché du conteneur par sertissage ou par rabat de griffes du couvercle sous un rebord du débouché du conteneur.

Lorsque le couvercle est fixé au conteneur par sertissage, les moyens d'ouverture du conteneur sont couramment constitués par un organe de préhension du couvercle par l'utilisateur, soit pour rompre la liaison entre le couvercle et le conteneur, soit pour déchirer le couvercle par cisaillement le long d'un chemin de fragilisation qu'il comporte.

Un problème posé par cette technique réside dans les inconvénients liés à la structure des moyens mis en oeuvre pour la fermeture du conteneur. Ces moyens impliquent en effet pour le consommateur une opération contraignante et délicate, voire sujette à un risque de blessure.

Par ailleurs, et notamment dans le cas d'une fixation par sertissage du couvercle sur le conteneur, le débouché du conteneur n'est pas totalement dégagé, ce qui entraîne des difficultés d'accès par l'utilisateur aux denrées alimentaires qu'il contient.

C'est pourquoi il a été émis l'idée d'exploiter la mise sous vide du conteneur pour maintenir naturellement le couvercle par dépression, en mettant à profit la différence de pression entre l'intérieur du conteneur et la pression atmosphérique.

A cet effet, on pourra notamment se reporter au document FR 2 686 059 A1 qui fait mention d'une telle méthode de fixation.

Il apparaît que l'opération consistant à la fois à placer le volume intérieur du conteneur sous vide et à le fermer par le couvercle reste délicate à mettre en oeuvre.

Le document FR 2 686 059 A1 mentionne la possibilité de ménager dans le couvercle un évent pour permettre l'échappée de l'air hors du conteneur lors de sa mise sous vide.

Cet évent est ensuite obturé par une pastille, avant mise à l'atmosphère du conteneur hermétiquement fermé par le couvercle.

Cependant, le document FR 2 686 059 A1 reste spéculatif quant aux moyens permettant de réaliser une telle opération.

Le document EP0019646 A1 propose une installation pour la fermeture sous vide de boites avec couvercle qui comprend une première étape de blocage du couvercle, sur le débouché de la boîte par le vide obtenu dans une enceinte et une deuxième étape, dans une autre enceinte, de sertissage du couvercle.

D'une part, ce document n'enseigne pas l'utilisation du vide dans le processus de conservation. D'autre part, la technique de sertissage rend l'ouverture de la boîte fastidieuse.

Un des problèmes les plus importants dans la conservation des denrées alimentaires en boîtes est cependant posé par la présence d'un liquide de couverture, lequel est mis en oeuvre pour protéger ces denrées de l'oxydation.

En effet, on constate que ces liquides tendent à diluer les substances solubles des produits alimentaires ainsi conservés telles que les minéraux, les arômes et les vitamines.

De plus, ces liquides de couverture qui pèsent souvent autant que les produits alimentaires, peuvent coûter autant que l'emballage, ce qui est notamment vrai pour les graisses utilisées lors du conditionnement de confits. Ces liquides de couverture doivent être également récupérés et recyclés, ce qui génère des surcoûts importants.

Par ailleurs, ces liquides sont généralement longs à chauffer et à refroidir augmentant ainsi considérablement le temps de cuisson des denrées alimentaires baignant dans ces liquides lors de leur stérilisation ou pasteurisation.

Il en résulte une surcuisson de ces denrées ayant pour effet de détruire les vitamines mais également de générer un risque sanitaire à long terme pour les consommateurs.

Un autre problème posé généralement dans le domaine de la mise sous vide de conteneurs alimentaires, réside dans les modalités de cette mise sous vide. Cette mise sous vide doit être organisée de manière à assurer une totale élimination des gaz incondensables et notamment de l'oxygène, ces éléments ayant pour effet l'altération du contenu tant sur le goût que sur la couleur. Il est également indispensable de moduler la progressivité de la mise sous vide pour éviter l'altération de la texture de l'aliment (éclatement des cellules dans la mise sous vide brutale).

En outre, une opération de pasteurisation ou de stérilisation peut être prévue postérieurement à la fermeture sous vide du conteneur. Le document FR 2 686 059 A1 mentionne la possibilité de stériliser ou de pasteuriser le conteneur après sa fermeture par dépression.

On connaît dans l'état de la technique le brevet américain N° US 3 258 345, qui se rapporte à un procédé de préparation de produits en conserve. Ce brevet américain de l'état de la technique décrit un procédé de conditionnement d'un produit alimentaire dans lequel on introduit ledit produit alimentaire et un ou plusieurs additif(s) dans un dispositif de mélange, dans lequel on met sous vide ce dispositif de mélange, dans lequel on mélange son contenu pour d'une part, assurer une pénétration du ou des additifs dans le produit alimentaire et d'autre part, dégazer le mélange ainsi formé, et dans lequel on conditionne au moins une portion du mélange ainsi blanchi à froid dans au moins un conteneur. Ce brevet américain de l'état de la technique décrit également un système de conditionnement d'un produit alimentaire comprenant un dispositif de mélange et une unité de pompage pour mettre sous vide l'espace intérieur dudit dispositif de mélange.

On connaît également dans l'état de la technique la demande de brevet français N° FR 1 434 926, qui décrit un procédé et un dispositif pour l'emballage de produits contenant du liquide.

Cependant, il ressort d'une manière générale, que l'utilisation de la technique de conservation des aliments sous vide en conteneur rigide reste délicate, tant au regard de la fermeture mécanique du conteneur qu'au regard, d'une part, des conditions de mise sous vide des aliments et d'autre part, du maintien d'un vide suffisant pendant une durée suffisamment longue pour satisfaire les utilisateurs.

Le but général de la présente invention est donc de proposer des moyens pour la conservation sous vide durable de produits alimentaires en conteneur rigide, qui tendent à résoudre les problèmes énoncés ci-dessus.

La présente invention vise ainsi un procédé de conditionnement et un système pour la mise en oeuvre de ce procédé, simple dans leur conception et dans leur mode opératoire, permettant de conserver sous vide des produits alimentaires notamment en morceaux, sur des durées plus longues que celles constatées à ce jour, sans détérioration des qualités notamment organoleptiques, de ces produits, à qui on épargne la surcuisson qui résulte aussi de la surabondance de liquides de couverture, ces derniers engendrant aussi un poids exagéré des conserves finies.

L'invention a aussi pour but de proposer des modalités d'utilisation d'un tel conteneur maintenu fermé par dépression, pour un traitement ultérieur par stérilisation ou pasteurisation des aliments qu'il contient, ce traitement n'entraînant pas de surcuisson des aliments.

Encore un objet de la présente invention est un procédé de conditionnement d'un produit alimentaire permettant d'alléger le poids final du conteneur par l'absence de liquide de couverture.

### BREVE DESCRIPTION DE L'INVENTION

A cet effet, l'invention concerne un procédé de conditionnement d'un produit alimentaire.

Selon l'invention, on réalise les étapes successives suivantes :
a) introduire ce produit alimentaire et un ou plusieurs additifs dans un dispositif de mélange,
b) mettre sous vide ce dispositif de mélange et mélanger son contenu pour d'une part, assurer une pénétration du ou des additifs dans le produit alimentaire et d'autre part, dégazer le mélange ainsi formé, jusqu'à une pression absolue inférieure ou égale à 30 mbars,
c) conditionner au moins une portion du mélange ainsi blanchi à froid dans au moins un conteneur.

A titre illustratif, ce produit alimentaire est un produit en morceaux.

Avantageusement, le ou les additifs sont choisis dans le groupe comprenant des stabilisants, des colorants, des épices, des aromates, des condiments, de l'eau, des huiles et des combinaisons de ces éléments.

Le procédé de la présente invention apporte, outre des améliorations innovantes par rapport à l'enseignement de la demande de brevet EP 1 421 001 A1 au nom de la présente demanderesse sur le plan du dégazage des produits alimentaires et sur le niveau de vide initial, également des modalités particulières de pasteurisation ou de stérilisation et de refroidissement d'un tel conteneur maintenu fermé par dépression, de manière à limiter l'impact sur la texture des aliments, comme la progressivité des changements de pression dans le conteneur.

La notion de vide profond est une notion relative liée à la température du produit lors de la fermeture du conteneur et à sa température ultérieure de conservation. Cependant, on définit ici le vide profond comme un niveau de pression partielle d'oxygène d'au plus 10 mbars à l'intérieur du conteneur à l'issue du procédé, mesurée à 4°C, niveau de pression que l'on souhaite conserver pendant trois ans après conditionnement.

Compte tenu du taux de fuite même infinitésimal des joints mis en oeuvre dans le commerce, et compte tenu de l'apparition de certains gaz pendant la cuisson des aliments riches en protéines et en sucres comme, par exemple, le gaz carbonique (dégradation de Strecker), il est nécessaire que le niveau de dégazage du produit réalisé lors de l'étape b), comme à l'étape c) lors d'un conditionnement sous vide, soit réalisé en dessous de 30 mbars de pression absolue d'air, et pour certains aliments, en dessous de 15 mbars de pression absolue d'air, de manière à garantir un niveau de vide profond à l'intérieur du conteneur à l'issue du procédé et ce pendant une durée d'au moins trois ans.

Des essais effectués avec le procédé, objet de la présente invention, ont montré que si l'on place sept cent cinquante (750) grammes d'un produit humide en présence de trente cinq (35) grammes d'eau liquide, le tout étant à une température de quarante degrés Celsius (40°C), et que l'on soumet cet ensemble ainsi obtenu à une pression absolue de l'ordre de vingt-quatre (24) mbars en partant d'une pression initiale à l'atmosphère, on abaisse sa température en deçà de quinze degrés Celsius (15°C) du fait de l'évaporation rapide et complète des trente cinq grammes (35 gr) d'eau qui consomme 542 kcal/gr d'eau évaporée, quantité de chaleur cédée par le produit lui-même qui entre en ébullition homogène et induit un refroidissement supplémentaire et homogène de l'ensemble. On obtient ainsi un dégazage complet dudit produit.

Avec le procédé objet de l'invention, on obtient une meilleure conservation des produits alimentaires et de leurs éléments, tels que les vitamines qui n'ont pas à subir l'altération de l'oxygène résiduel habituellement contenu dans les produits emballés par les techniques antérieures et tels que les sels minéraux qui tendent à se diluer dans les liquides de couverture.

Par exemple, en mettant une boite de haricots verts sous vide, fortement chargés en protéines, et par conséquent sensibles aux réactions de Maillard, si on atteint lors de l'étape de conditionnement, une pression absolue de 15 mbars, dont environ 3 mbars de pression partielle d'oxygène et 12 mbars de pression partielle d'azote, on observe à la cuisson un dégazage aboutissant par les dégradations de Strecker à la production de dioxyde de carbone et la pression absolue résultant dans boîte peut atteindre 57 mbars de pression totale dont 42 mbars de pression résultant du dioxyde de carbone, gaz inerte pour le contenu de la boîte, et 3 mbars de pression partielle d'oxygène et 12 mbars de pression partielle d'azote.

Cette très faible quantité d'oxygène rémanente ne constitue pas une gêne pour la plupart des produits alimentaires qui requièrent une légère oxydation pour parfaire le développement de leurs arômes. Par exemple, il est connu que grâce à cette légère oxydation, le beurre acquiert un goût de noisette, les vins se bonifient, les fromages, pâtés et poissons rassissent légèrement pour satisfaire aux critères de goût du consommateur final. A terme l'oxygène rémanent disparaît lors de ces transformations biochimiques.

Ce procédé permet aussi, sur des produits en morceaux avec jutage réduit, tel qu'environ 3% en poids du poids net total, notamment pour les haricots, les petits pois, le maïs ou denrées alimentaires analogues, de réduire considérablement le temps de stérilisation ou de pasteurisation, grâce au fait que tous les échanges de chaleur se passent en pression de vapeur saturante, et que l'on profite donc des changements de phase liquide / vapeur (chaleur latente de vaporisation/condensation de l'eau = 542 kcal/gr) qui accélèrent les transferts de chaleur entre les aliments, les parois de la boîte et l'autoclave de stérilisation.

Pour les produits comme le foie gras, les pâtés ou analogues, les poissons, qui forment un bloc massif dont l'intérieur n'est pas accessible à la vapeur saturante et qui se réchauffent donc uniquement par conduction, ce procédé, du fait du vide très profond atteint préalablement à leur conditionnement grâce au dispositif de mélange sous vide, permet aussi de soustraire les denrées aux pressions habituelles qui règnent dans les conteneurs au moment de la stérilisation, ce qui amène les avantages suivants :
* une limitation du ressuage des graisses, et donc une limitation de la perte du poids net du produit emballé lors de la stérilisation,
* d'améliorer l'onctuosité du produit et donc sa qualité, pour les produits tels que le confit de canard ou analogues,
* de favoriser la pénétration de l'huile ou du liquide de couverture, pour les produits tels que les poissons à l'huile ou analogues,
* de supprimer le brunissement de la surface du produit, résultant d'une oxydation habituellement provoquée par l'oxygène résiduel contenu dans les emballages de l'art antérieur.

De plus, pour des produits secs comme les noix ou les fruits à coque, les essais ont prouvé que la mise sous vide profond, même sans traitement thermique, permettait d'obtenir un effet bactéricide sur les bactéries aérobies, très nombreuses sur les noix décoquillées ainsi que sur toutes les bactéries non sporulées par éclatement des cellules dont le cytoplasme entre en ébullition sous l'effet de la chute de pression.

Enfin, le même effet bactéricide a été observé dans les produits humides, ce qui explique pourquoi le procédé de la présente invention permet de réduire significativement la durée de stérilisation en autoclave, par abaissement de la charge bactérienne initiale.

L'étape c) de conditionnement peut être réalisée comme décrite ci-après sous vide. Alternativement, un tel conditionnement peut être réalisé à pression ambiante, la rupture du vide à la fin de l'étape b) étant alors réalisée par introduction, par exemple, d'un gaz inerte pour le mélange, tel que de l'azote (N₂), permettant de saturer ce dernier et d'éviter toute oxydation du mélange ainsi blanchi à froid lors de son conditionnement.

Dans différents modes de réalisation particuliers de ce procédé, chacun ayant ses avantages particuliers et susceptibles de nombreuses combinaisons techniques possibles:
- à l'étape a), ledit produit alimentaire et le ou les additifs sont introduits dans une baratte équipée d'un dispositif de mise sous vide.
Bien entendu, il pourrait s'agir de tout autre dispositif de malaxage ou malaxeur.
De manière avantageuse, cette baratte comporte un dispositif de réglage de sa vitesse de rotation afin d'ajuster cette vitesse de rotation en fonction de la nature du produit alimentaire à conditionner.
De manière plus générale, le dispositif de mélange comporte un dispositif de réglage afin d'ajuster la vitesse de mélange en fonction de la nature du produit alimentaire.
Ce dispositif de mélange peut encore comporter un système d'introduction d'un gaz inerte permettant de saturer le mélange ainsi blanchi à froid en vue d'un conditionnement hors vide poussé tel qu'à l'atmosphère, de ce mélange. Un tel système d'introduction comprend avantageusement un ou plusieurs orifices placés sur l'enceinte dudit dispositif de mélange, une ou plusieurs vannes pour obturer/ouvrir le ou lesdits orifices, ainsi qu'un circuit d'alimentation en gaz pouvant être déconnecté de ladite enceinte lors de l'étape b).
- l'étape b) est réalisée pendant une durée t minimale assurant la destruction de la majeure partie de la charge bactérienne non sporulée propre à chaque produit alimentaire,
- avant l'étape b), la température du produit alimentaire est à une température supérieure à la température d'ébullition de l'eau pour la pression de mise sous vide,
- à la fin de l'étape b), le mélange ainsi formé est à une pression absolue comprise entre 10 et 25 mbars,
- pour un ou des ingrédients ou additifs fragiles, par exemple parce qu'il est ou ils sont plus volatils, devant être ajoutés lors de l'étape c), on introduit, préalablement à cette dernière étape, ce ou ces ingrédients ou additifs seuls dans ledit dispositif de mélange et on dégaze ce ou ces seuls éléments jusqu'à une pression absolue inférieure ou égale à 30 mbars, ceux-ci ayant été placés au préalable à une température inférieure à +10°C, et encore mieux comprise entre - 1°C et + 5°C afin d'éviter la volatilisation de certains constituants à fonction aromatique
A titre purement illustratif, il peut s'agir du diacétyle dans le beurre.
De manière plus générale, la température à l'étape b) est contrôlée de telle sorte que le produit alimentaire et les liquides l'environnant atteignent en fin de dégazage une température inférieure à la température d'ébullition de tous les ingrédients constituant le produit ou l'environnant, lesquels seraient susceptibles d'entrer en ébullition et de s'évaporer lors de la mise sous vide.
- ce procédé comporte une étape de refroidissement de ce produit alimentaire avant la fin de l'étape b).
Cette étape de refroidissement du produit alimentaire est réalisée avant introduction de celui-ci dans ledit dispositif de mélange et/ou lors de l'étape de mélange dans le dispositif de mélange.
Ce dispositif de mélange peut, par exemple, comporter des moyens de refroidissement tels qu'un circuit de refroidissement dans lequel circule un fluide réfrigérant notamment de l'eau froide.
- à l'étape c), ledit mélange étant à une température inférieure à la température d'ébullition de l'eau à la pression mise en oeuvre pour conditionner sous vide ce mélange, on conditionne sous vide au moins une portion du mélange ainsi blanchi à froid dans au moins un conteneur.
De préférence, à l'étape c), après introduction d'au moins une portion dudit mélange dans au moins un conteneur rigide, un liquide d'imprégnation à base d'eau est ajoutée dans chaque conteneur, la quantité de liquide d'imprégnation ajoutée étant égale uniquement à la quantité requise pour former une atmosphère de vapeur saturante dans chaque conteneur de manière à assurer les échanges thermiques par évaporation ou condensation à la pression absolue régnant dans chaque conteneur après fermeture.
La quantité de liquide d'imprégnation à base d'eau ajoutée est donc strictement inférieure à la quantité de liquide requise pour former un liquide de couverture du contenu du conteneur correspondant.
De préférence, le liquide ainsi ajouté représente moins de quinze pourcents (15 %) en poids, et encore mieux moins de cinq pourcents (5 %) en poids, du poids total de la portion ainsi introduite dans chaque conteneur
De manière avantageuse, ayant introduit dans plusieurs conteneurs rigides, une portion identique ou sensiblement identique de ce mélange, lesquels définissent un lot, on introduit dans au moins un de ces conteneurs, un ou plusieurs dispositifs de mesure pour définir un ou des conteneurs témoins, chaque dispositif de mesure comportant des moyens de communication pour émettre la ou les mesures réalisées sous la forme de signaux de communication et en ce que plaçant ledit lot dans une enceinte, on introduit également dans cette enceinte reliée à des moyens de mise en dépression de celle-ci, un ou plusieurs dispositifs de mesure comportant des moyens de communication pour émettre la ou les mesures réalisées sous la forme de signaux de communication, afin de déterminer en temps réel, la pression différentielle et la température dans chaque conteneur dudit lot et permettre ainsi la surveillance du conditionnement de ce lot.
A titre purement illustratif, ces moyens de communication sont des moyens de communication sans fil émettant des signaux de communication sans fil.
Bien entendu, dans un mode de réalisation particulier, ces moyens de communication peuvent émettre et recevoir des signaux de communication.
- chaque conteneur étant un conteneur rigide, à l'étape c), on réalise les étapes suivantes :
   a) pour chaque conteneur comportant au moins une telle portion, placer ce conteneur avec un couvercle ayant un joint d'étanchéité dans une enceinte reliée à des moyens de mise en dépression de celle-ci,
   b) maintenir le couvercle au-delà de l'orifice du conteneur correspondant par des moyens magnétiques de manière à permettre l'échappement des gaz contenus dans ce conteneur,
   c) mettre progressivement l'enceinte sous vide pour assurer une mise sous vide du conteneur à une pression absolue inférieure ou égale à 30 mbars, cette progressivité étant déterminée selon la valeur susvisée de pression absolue et la nature du contenu de ce conteneur,
   d) plaquer le couvercle sur l'ouverture du conteneur de manière à comprimer son joint d'étanchéité contre l'orifice du conteneur,
      - mettre l'enceinte à la pression atmosphérique puis relâcher la pression exercée sur le couvercle, la liaison entre les moyens magnétiques et le couvercle étant interrompue.
      - ayant fermé hermétiquement un conteneur donné avec un couvercle par dépression, on réalise les étapes supplémentaires suivantes:
         - porter le contenu de ce conteneur à une température de traitement thermique supérieure ou égale à une température seuil de pasteurisation ou de stérilisation pendant une durée d'exposition T tout en contrôlant de manière continue, d'une part la température et la pression régnant dans ce conteneur et d'autre part la pression environnante à ce conteneur afin d'éviter toute ouverture intempestive de celui-ci pendant le traitement thermique et toute dégradation de la structure de ladite portion contenue dans ce conteneur et/ou du conteneur lui-même, puis
         - refroidir son contenu à une température inférieure à la température de cuisson du produit alimentaire.
Avantageusement, on observe que la durée d'exposition T est inférieure, voire très inférieure, aux normes en vigueur dans la profession à égalité de valeur de stérilisation atteinte.
De préférence, le refroidissement de son contenu est obtenu par exposition du conteneur à au moins un jet d'un liquide de refroidissement, de préférence immédiatement à la fin de la durée d'exposition T.
De manière avantageuse, ce refroidissement est obtenu de manière très accélérée par rapport aux usages de la profession, à savoir environ 11 minutes au lieu des 20 à 50 minutes en vigueur, ce qui est rendu possible par le niveau inhabituel de vide atteint dans le conteneur qui permet des échanges thermiques en phase de vapeur saturante.
Ce ou ces jets de liquide de refroidissement sont de préférence des jets d'eau.
Avantageusement, on réalise les étapes successives suivantes pour refroidir chaque conteneur :
a) après purge du volume d'air contenu dans l'autoclave, exposer chaque conteneur à au moins un jet d'un liquide à la température de traitement,
b) récupérer au moins une partie du liquide ainsi introduit dans l'autoclave et mélanger celle-ci avec un liquide froid pour abaisser la température de chaque conteneur sans causer de chocs thermiques susceptibles d'endommager ce dernier,
c) réitérer l'étape b) jusqu'à abaisser progressivement la température de chaque conteneur à une température inférieure à la température de cuisson du produit alimentaire tout en contrôlant en temps réel la pression dans l'autoclave par injection d'un flux gazeux sous pression à l'intérieur de l'autoclave pour établir une contrepression ou par actionnement d'une vanne de purge de l'autoclave.
   - ce procédé permet de mesurer, limiter et piloter de manière continue l'écart entre la pression interne au conteneur et la pression externe pendant toutes les étapes du procédé, et notamment pendant les opérations de chauffe (stérilisation, pasteurisation) et de refroidissement, en maintenant la différence de pression entre l'intérieur du conteneur et la chambre autoclave entre 300 et 800 mbars tant que la température de l'autoclave reste au dessus de 90°C, de manière à éviter l'ouverture du conteneur, la dégradation de la structure et des qualités des denrées et/ou l'écrasement brutal du conteneur, ainsi que de manière à éviter l'écrasement du joint du couvercle du conteneur ramolli par la chaleur,
   - le procédé permet de mesurer, limiter et piloter de manière continue les montées et les descentes de pression et de température dans le conteneur et dans l'atmosphère de l'autoclave, de manière à rendre tous les changements progressifs, en évitant par exemple le contact de liquides de refroidissement trop froids avec les conteneurs chauds, de manière à éviter la dégradation de la structure et des qualités des denrées et/ou l'écrasement brutal du conteneur, ainsi que de manière à éviter l'écrasement du joint du couvercle du conteneur ramolli par la chaleur.

La présente invention concerne encore un système de conditionnement pour la mise en oeuvre du procédé de conditionnement d'un produit alimentaire tel que décrit précédemment, comprenant au moins :
- un dispositif de mélange,
- une unité de pompage pour mettre sous vide l'espace intérieur dudit dispositif de mélange, ladite unité de pompage étant configurée pour atteindre une pression absolue dans ledit dispositif de mélange inférieure à 30 mbars, et encore mieux comprise entre 10 et 25 mbars,
- une enceinte de réception d'un conteneur et de son couvercle, ces derniers étant rigides, cette enceinte étant reliée à des moyens de mise en dépression de celle-ci et comprenant des moyens de maintien magnétique du couvercle au-delà de l'orifice du conteneur correspondant pour permettre l'échappement des gaz contenus dans ce conteneur, ladite enceinte étant équipée d'un ou plusieurs capteurs de mesure émettant chacun des signaux de mesure,
- un autoclave de stérilisation équipé d'un ou plusieurs capteurs de mesure émettant chacun des signaux de mesure, et
- une unité centrale de commande recevant lesdits signaux de mesure pour contrôler en temps réel des paramètres physiques tels que la pression et la température, dans l'enceinte et/ou dans chaque conteneur et/ou dans l'autoclave.
De préférence, cet autoclave est équipé d'un système de douche pour envoyer au moins un jet d'un liquide sur le conteneur après pasteurisation ou stérilisation de son contenu afin de le refroidir, cet autoclave comportant un ensemble d'introduction d'un flux gazeux sous pression à l'intérieur de l'autoclave pour établir une contrepression et/ou une vanne de purge de l'autoclave commandée à distance.

Ce liquide est, par exemple, de l'eau ou un autre liquide de refroidissement non susceptible de dégrader le conteneur ou l'autoclave.

De manière avantageuse, cet autoclave comporte un système de récupération d'une partie au moins du liquide introduit dans l'autoclave, celle-ci étant rebouclée au moins en partie sur le système de douche pour être introduite de nouveau dans l'autoclave après mélange avec un liquide à une température inférieure contenu dans un réservoir de stockage, ledit système comportant au moins un dispositif de mesure pour mesurer le débit et la température du liquide ainsi récupéré afin de déterminer le volume de liquide à réinjecter à une température inférieure.

On observera que c'est la synergie :
- des moyens de mise sous vide préalable nécessaires à l'exécution de l'étape b) décrite précédemment, dont l'efficacité sur le produit nécessite un temps suffisamment important de passage sous vide, donc dans un dispositif spécifique de mélange sous vide et avec les ingrédients nécessaires, de telle sorte que le produit ait eu le temps de se vider de son air et que ses cavités soient aplaties ou comblées,
- avec les moyens nécessaires aux autres étapes du procédé décrit précédemment, dont la cadence en industrie, conteneur par conteneur, ne permettrait pas d'obtenir à un prix raisonnable une pression assez basse pendant le temps imparti, comme les essais l'ont démontré,
qui permet de produire par la suite dans le conteneur fermé les conditions industrielles durables de basse pression recherchées, l'amélioration du dégazage, l'amélioration des qualités des produits et l'allongement de la durée de conservation étant indissociables puisque :
- d'une part, dans un conteneur ordinaire ou dans un conteneur sous vide insuffisant, la pression atteinte pendant la stérilisation est plus importante que dans un conteneur sous vide profond, ce qui entraine une dégradation plus importante des nutriments et des qualités organoleptiques des aliments (cuisson sous pression) ;
- d'autre part, c'est la basse pression obtenue par la combinaison du premier dégazage (étape b) et du second (étape c) qui garantit que les échanges de chaleur entre l'intérieur du conteneur et l'extérieur puissent se passer plus longtemps au voisinage du point d'ébullition de l'eau, c'est-à-dire à vitesse accélérée en exploitant la chaleur latente de changement de phase,
- c'est également ladite basse pression obtenue par la dite combinaison de moyens qui permet de supprimer complètement les liquides de couverture, censés protéger les aliments de l'effet oxydant de l'oxygène, cette suppression des liquides de couverture réduisant ainsi également la masse à chauffer et à refroidir dans les conteneurs de moitié environ,
- c'est également ladite basse pression obtenue par la dite combinaison de moyens qui permet de supprimer complètement les micro-poches d'air à l'intérieur des aliments et qui sont responsables des zones de rancissement et de dégradation organoleptique à l'intérieur des aliments, améliorant ainsi les qualités organoleptiques desdits aliments, et permettant de reporter la date limite d'utilisation optimale des conserves qui est, rappelons le, liée à l'entrée inexorable d'oxygène dans les conserves,
- ladite basse pression (obtenue par la dite combinaison de moyens) réduisant en outre les temps de cuisson totaux, en particulier grâce à une réduction du temps de refroidissement après stérilisation en autoclave, ce qui permet d'améliorer aussi les qualités du produit en ce que la dégradation des arômes, couleurs et texture des aliments par surcuisson est réduite.

### BREVE DESCRIPTION DES DESSINS

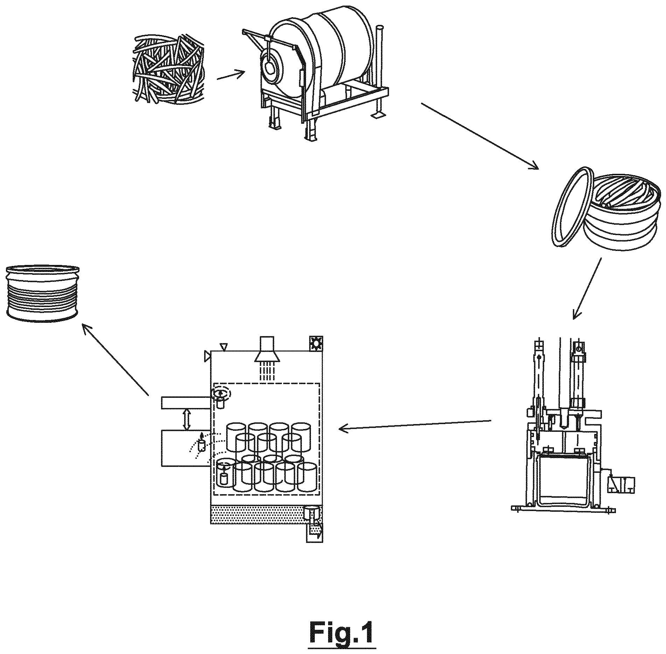

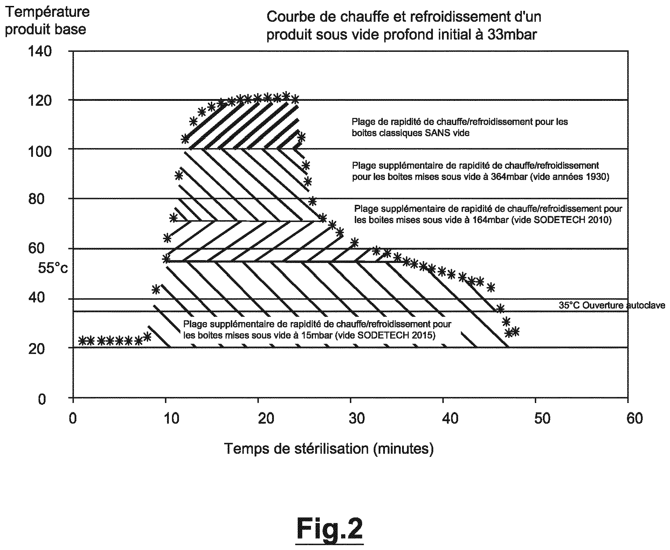

D'autres avantages, buts et caractéristiques particulières de la présente invention ressortiront de la description qui va suivre faite, dans un but explicatif et nullement limitatif, en regard de la Figure 1 annexée, laquelle représente schématiquement un système de conditionnement selon un mode de réalisation particulier de la présente invention, et de la Figure 2 annexée, qui montre la modification des plages de chauffe et de refroidissement accélérés, au gré de l'avancement du vide dans le conteneur qui a été rendu possible au cours des améliorations technologiques.

### DESCRIPTION DETAILLEE DE MODES DE REALISATION DE

### L'INVENTION

On notera tout d'abord que les figures ne sont pas à l'échelle.
La figure 1 montre un système de conditionnement pour la mise en oeuvre du procédé de conditionnement d'un produit alimentaire comportant des morceaux, selon un mode de réalisation particulier de l'invention.
La figure 2 montre la modification des plages de chauffe et de refroidissement accélérés, au gré de l'avancement du vide dans le conteneur qui a été rendu possible au cours des améliorations technologiques depuis les années 1920, époque où les pompes ne permettaient pas d'atteindre moins de 364mbar de vide dans les conteneurs, plages dans lesquelles on peut bénéficier de l'état de vapeur saturante à l'intérieur du conteneur fermé, état qui permet de garantir que tous les échanges thermiques internes au conteneur se fassent par condensation ou évaporation sur les surfaces du conteneur ou du produit, ce qui permet le transfert de 54kCal/gramme d'eau évaporée ou condensée (chaleur latente d'ébullition/condensation). Ainsi, on constatera qu'avec le gain de plage, donc de temps apporté par le système objet de la présente invention, on peut maintenant sortir beaucoup plus rapidement des zones classiques d'étuvage (37°C-55°C) réputées favoriser le développement des spores bactériennes, ce qui représente une sécurité supplémentaire pour les semi-conserves. On peut aussi anticiper l'ouverture des autoclaves qui se produit en général en dessous de 35°C, ceci permettant de profiter des équipements de stérilisation plus longtemps, lesquels constituent un facteur limitant la rentabilité industrielle.

Le procédé proposé ajoute au procédé de conditionnement décrit dans le document EP 1 421 001 A1 au nom de la présente demanderesse, plusieurs étapes qui consistent comme suit :
(a) en amont de l'étape de mise sous vide d'un conteneur étanche et rigide comportant un produit alimentaire, dans l'enceinte décrite dans le document EP 1 421 001 A1, à préparer ce produit alimentaire de telle sorte qu'il soit déjà bien dégazé et assaisonné, en le blanchissant « à froid », l'opération consistant à faire subir un barattage sous vide à froid dans un malaxeur, ou dispositif de mélange, sous vide poussé à 10-30 mbars de pression, cette étape de préparation étant surtout destinée à éliminer tous les gaz incondensables emprisonnés à l'intérieur des morceaux du produit alimentaire et jusqu'à ce qu'aucune cavité ne reste dans le produit, soit qu'elle soit aplatie par le vide, soit qu'elle se remplisse complètement des ingrédients eux-mêmes, mais aussi à faire pénétrer en profondeur les additifs tels que sels et arômes, éventuellement ajoutés et enfin à réduire fortement la charge bactérienne par explosion des cellules non sporulées ce qui permet de réduire par la suite les temps de traitement thermique de pasteurisation ou de stérilisation.
(b) Toujours en amont de cette étape de mise sous vide du conteneur, à ajouter à la portion au moins du mélange précédemment obtenu placée dans le conteneur étanche et rigide, une quantité d'eau bien inférieure à la quantité d'eau habituellement requise pour former un liquide de couverture de ce mélange, quantité d'eau limitée ici à quelques grammes, par exemple 30 grammes pour un conteneur de 1,5 litres contenant 700 grammes de haricots verts, quantité nécessaire à la constitution d'une atmosphère de vapeur saturante qui permet par la suite que les échanges de chaleur se produisent à très basse pression, que l'ébullition de l'eau se passe en dessous de 30°C, utilisant donc la chaleur latente de vaporisation/condensation de l'eau qui permet d'accélérer les échanges thermiques.
(c) en amont de cette étape de mise sous vide, le cas échéant, et en particulier pour les produits à cuire, à installer dans un ou plusieurs des récipients du lot destiné à être conditionné, un équipement de sondes à radio-transmission permettant de connaître par analogie en temps réel la pression et la température dans tous les conteneurs de ce lot ;
(d) pendant l'étape de mise sous vide décrite dans le document EP 1 421 001 A1, à mettre progressivement l'enceinte 1 sous vide profond en atteignant une pression dans chaque conteneur du lot comprise entre 10 et 30 mbars, cette progressivité étant déterminée selon la valeur susvisée de pression et la nature du produit alimentaire conditionné dans chaque conteneur et également de la température de ce produit ;
(e) pendant cette étape de mise sous vide, à contrôler et conduire la descente progressive du vide, le niveau du vide et la durée d'exposition du produit au vide avec des moyens appropriés, par exemple avec un système de sondes de pression et de température à radio transmission installées dans une ou des boîtes témoins et dans le four autoclave, ces sondes étant reliées à unité de commande centrale pourvue d'un programme informatique de représentation numérique ou graphique et, le cas échéant d'un programme automatique de conduite des montées et descentes de pression et de température ;
(f) après cette étape de mise sous vide, le cas échéant, et en particulier pour les produits à cuire, à organiser la stérilisation ou la pasteurisation dans un autoclave à vapeur et à contrepression, en contrôlant sans cesse l'écart de température et de pression entre l'intérieur de chaque conteneur et l'atmosphère du four autoclave dans lequel il se trouve, pour éviter que chaque conteneur ne s'ouvre à l'occasion de sa montée interne en température et en pression ou qu'il ne s'écrase par suite d'une pression trop importante dans l'autoclave, ce qui s'obtient en maintenant la différence de pression entre l'intérieur de chaque conteneur et la chambre autoclave entre 300 et 800 mbars tant que la température de l'autoclave reste au dessus de 90°C, cette opération délicate obligeant à automatiser la surveillance de l'autoclave, en s'assurant selon les cas qu'à certains moments, il n'est pas menacé de cavitation s'il utilise une pompe pour évacuer l'eau de son ballast ;
(g) après l'étape de mise sous vide, le cas échéant, et en particulier pour les produits à cuire, à refroidir rapidement le produit dans chaque conteneur après pasteurisation ou stérilisation, de préférence avec un autoclave dont le refroidissement se fait par douche à température progressivement descendante en partant de la température de stérilisation (par exemple, 121°C) pour atteindre la température de fin de cuisson (par exemple, 68°C) en moins de onze (11) minutes et si possible en moins de trois (3) minutes lorsqu'on dispose d'un autoclave modifié, soit avec extension importante de sa surface d'échange, soit avec une évacuation continue de l'eau du ballast, en faisant descendre progressivement la pression dans l'autoclave et en contrôlant sans cesse l'écart de température et de pression entre l'intérieur de chaque conteneur et l'atmosphère du four autoclave dans lequel il se trouve, pour éviter que chaque conteneur ne s'ouvre par suite d'une pression insuffisante dans l'autoclave ou qu'il ne s'écrase par suite d'une pression trop importante dans l'autoclave, ce qui peut se faire par exemple avec un système de sondes de pression et de température à radio transmission installé dans une ou des boîtes témoins et dans le four autoclave.

Il est ainsi possible d'atteindre après conditionnement et refroidissement l'objectif de vide avec une pression absolue d'au plus 50 mbars à 4°C dans le conteneur que vise la présente invention.

Un aspect important de l'invention concerne la mise en oeuvre d'une opération de traitement des aliments par stérilisation ou pasteurisation, qui est prévue par chauffage du conteneur postérieurement à sa fermeture. On comprendra qu'un tel traitement concerne des denrées alimentaires contenant de l'eau dont on a besoin pour contribuer à la création d'une atmosphère de vapeur saturante et exploiter les avantages du changement de phase de l'eau décrits précédemment.

L'ébullition instantanée de l'eau des produits, provoquée par la mise sous vide du conteneur provoque un dégazage complémentaire du produit alimentaire et de l'intérieur du conteneur et garantit un environnement exclusivement constitué de vapeur d'eau. Mais l'eau des produits ne suffit pas toujours à créer assez de vapeur. Un jutage d'un volume très limité est donc nécessaire (30 gr pour 700 g de haricots verts environ dans un conteneur d'1,5 litre) pour assurer assez de vapeur saturante dans le conteneur pour permettre les transferts accélérés de chaleur au moment de la stérilisation. Il en découle que le produit est protégé de toute oxydation, soit par oxydation directe, soit par oxydation enzymatique, et qu'il n'est pas nécessaire de le juter en couverture totale, opération qui tend couramment à provoquer la dilution des substances solubles contenues dans le produit.

Sous l'effet du vide profond (de 10 à 30 mbars de pression absolue) réalisé dans le conteneur, le joint d'étanchéité périphérique du couvercle s'applique hermétiquement et durablement de lui-même contre le débouché du conteneur, du fait de la forme en cuvette de la partie centrale du couvercle qui guide le couvercle dans son déplacement et du fait de la propreté des bords du couvercle et du débouché du conteneur, lequel doit présenter un rebord enroulé pour offrir une surface suffisante de contact avec le joint du couvercle qui doit être doté d'une gorge annulaire garnie par le dit joint, lequel doit être assez souple pour épouser les formes du col du conteneur et assez résistant pour supporter les variations de pression propres au procédé et la pression finale qui s'exerce après refroidissement sur le joint et qui atteint environ 8 - 12 kg/cm² selon le format de conteneur, pression à laquelle s'ajoutera celle des conteneurs pleins empilés dessus lors du stockage et du transport des produits finis.

Pour obtenir les refroidissements rapides proposés par la présente invention, on peut utiliser une injection d'eau par douche d'eau tempérée en supprimant tout recyclage interne de l'eau de refroidissement dans l'autoclave, en ne maintenant dans son ballast qu'une quantité faible d'eau et en évacuant cette eau chaude vers une unité de stockage extérieure.

La température de l'eau doit être modulée de telle sorte qu'elle baisse progressivement à partir de la température de pasteurisation ou de stérilisation (par exemple, T_{S} = 121°C), sans trop s'écarter de la température de chaque conteneur pour éviter les chocs thermiques capables de provoquer l'écrasement de ceux-ci, de manière à atteindre progressivement une température basse (tel qu'environ 25°C à 30°C) dans l'autoclave, la température de chaque conteneur permettant la fin de cuisson du produit alimentaire contenu dans le conteneur correspondant.

On a constaté que le procédé de la présente permet d'économiser jusqu'à 90 % des quantités d'eau habituellement utilisées en conserverie de légumes et jusqu'à 100 % des graisses de couverture habituellement utilisées en confiserie des viandes, ayant pour conséquence la réduction du poids transporté de 40% au moins.

Pour les produits à cuire, ce procédé assure un refroidissement du produit alimentaire contenu dans le conteneur après pasteurisation ou stérilisation en un temps inférieur de 50 à 75 % aux temps habituellement constatés, à savoir en moins de 10 minutes au plus et, si l'on dispose d'un autoclave à forte capacité d'échange de chaleur, en moins de 2 minutes pour un conteneur cylindrique de type tambourin contenant 1,5 litre en diamètre 153 mm et hauteur 92 mm.

## Revendications

1. Procédé de conditionnement d'un produit alimentaire, dans lequel on réalise les étapes successives suivantes :
a) introduire ce produit alimentaire et un ou plusieurs additifs dans un dispositif de mélange,
b) mettre sous vide ce dispositif de mélange et mélanger son contenu pour d'une part, assurer une pénétration du ou des additifs dans le produit alimentaire et d'autre part, dégazer le mélange ainsi formé,
c) conditionner au moins une portion du mélange ainsi blanchi à froid dans au moins un conteneur ;
ledit procédé étant **caractérisé en ce que** l'étape de mettre sous vide le dispositif de mélange et mélanger son contenu pour d'une part, assurer une pénétration du ou des additifs dans le produit alimentaire et d'autre part, dégazer le mélange ainsi formé, est réalisée jusqu'à une pression absolue inférieure ou égale à 30 mbars,
**en ce qu'**à l'étape c), ledit mélange étant à une température inférieure à la température d'ébullition de l'eau à la pression mise en oeuvre pour conditionner sous vide ce mélange, ladite pression mise en oeuvre pour conditionner sous vide ce mélange étant égale ou inférieure à 30 mbars, on conditionne sous vide au moins une portion du mélange ainsi blanchi à froid dans au moins un conteneur,
et **en ce qu'**ayant introduit dans plusieurs conteneurs rigides, une portion identique ou sensiblement identique de ce mélange, lesquels définissent un lot, on introduit dans au moins un de ces conteneurs, un ou plusieurs dispositifs de mesure pour définir un ou des conteneurs témoins, chaque dispositif de mesure comportant des moyens de communication pour émettre la ou les mesures réalisées sous la forme de signaux de communication et **en ce que** plaçant ledit lot dans une enceinte, on introduit également dans cette enceinte reliée à des moyens de mise en dépression de celle-ci, un ou plusieurs dispositifs de mesure comportant des moyens de communication pour émettre la ou les mesures réalisées sous la forme de signaux de communication, afin de déterminer en temps réel, la pression différentielle et la température dans chaque conteneur dudit lot et permettre ainsi la surveillance du conditionnement de ce lot.

2. Procédé selon la revendication 1, **caractérisé en ce qu'**à l'étape a), ledit produit alimentaire et le ou lesdits additifs sont introduits dans une baratte équipée d'un dispositif de mise sous vide.

3. Procédé selon la revendication 1 ou 2, **caractérisé en ce que** l'étape b) est réalisée pendant une durée t minimale assurant la destruction de la majeure partie de la charge bactérienne non sporulée propre à chaque produit alimentaire.

4. Procédé selon l'une quelconque des revendications 1 à 3, **caractérisé en ce qu'**avant l'étape b), la température du produit alimentaire est à une température supérieure à la température d'ébullition de l'eau pour la pression de mise sous vide.

5. Procédé selon l'une quelconque des revendications 1 à 4, **caractérisé en ce qu'**à la fin de l'étape b), le mélange ainsi formé est à une pression absolue comprise entre 10 et 25 mbars.

6. Procédé selon l'une quelconque des revendications 1 à 5, **caractérisé en ce qu'**à l'étape c), après introduction d'au moins une portion dudit mélange dans au moins un conteneur rigide, un liquide d'imprégnation à base d'eau est ajoutée dans chaque conteneur, la quantité de liquide d'imprégnation ajoutée étant égale uniquement à la quantité requise pour former une atmosphère de vapeur saturante dans chaque conteneur de manière à assurer les échanges thermiques par évaporation ou condensation à la pression absolue régnant dans chaque conteneur après fermeture.

7. Procédé selon la revendication 6, **caractérisé en ce que** le liquide ainsi ajouté représente moins de quinze pourcents en poids, et encore mieux moins de cinq pourcents en poids, du poids total de la portion ainsi introduite dans chaque conteneur.

8. Procédé selon l'une quelconque des revendications 1 à 7, **caractérisé en ce que** pour un ou des ingrédients ou additifs fragiles devant être ajoutés lors de l'étape c), on introduit, préalablement à cette dernière étape, ce ou ces ingrédients ou additifs seuls dans ledit dispositif de mélange et on dégaze ce ou ces seuls éléments jusqu'à une pression absolue inférieure ou égale à 30 mbars, ceux-ci ayant été placés au préalable à une température inférieure à +10°C, et encore mieux comprise entre - 1°C et + 5°C afin d'éviter la volatilisation de certains constituants à fonction aromatique

9. Procédé selon la revendication 1, **caractérisé en ce que** chaque conteneur étant un conteneur rigide, à l'étape c), on réalise les étapes suivantes :
a) pour chaque conteneur comportant au moins une telle portion, placer ce conteneur avec un couvercle ayant un joint d'étanchéité dans une enceinte reliée à des moyens de mise en dépression de celle-ci,
b) maintenir le couvercle au-delà de l'orifice du conteneur correspondant par des moyens magnétiques de manière à permettre l'échappement des gaz contenus dans ce conteneur,
c) mettre progressivement l'enceinte sous vide pour assurer une mise sous vide du conteneur à une pression absolue inférieure ou égale à 30 mbars, cette progressivité étant déterminée selon la valeur susvisée de pression absolue et la nature du contenu de ce conteneur,
d) plaquer le couvercle sur l'ouverture du conteneur de manière à comprimer son joint d'étanchéité contre l'orifice du conteneur,
e) mettre l'enceinte à la pression atmosphérique puis relâcher la pression exercée sur le couvercle, la liaison entre les moyens magnétiques et le couvercle étant interrompue.

10. Procédé selon l'une quelconque des revendications précédentes, **caractérisé en ce qu'**ayant fermé hermétiquement un conteneur donné avec un couvercle par dépression, on réalise les étapes supplémentaires suivantes:
- porter le contenu de ce conteneur à une température de traitement thermique supérieure ou égale à une température seuil de pasteurisation ou de stérilisation pendant une durée d'exposition T tout en contrôlant de manière continue, d'une part la température et la pression régnant dans ce conteneur et d'autre part la pression environnante à ce conteneur afin d'éviter toute ouverture intempestive de celui-ci pendant le traitement thermique et toute dégradation de la structure de la portion contenue dans ce conteneur et/ou du conteneur lui-même, puis
- refroidir son contenu à une température inférieure à la température de cuisson du produit alimentaire.

11. Procédé selon la revendication 10, **caractérisé en ce que** le refroidissement de son contenu est obtenu par exposition du conteneur à au moins un jet d'un liquide, de préférence immédiatement à la fin de la durée d'exposition T.

12. Procédé selon la revendication 10 ou 11, **caractérisé en ce qu'**on réalise les étapes successives suivantes pour refroidir chaque conteneur :
a) après purge du volume d'air contenu dans l'autoclave, exposer chaque conteneur à au moins un jet d'un liquide à la température de traitement,
b) récupérer au moins une partie du liquide ainsi introduit dans l'autoclave et mélanger celle-ci avec un liquide froid pour abaisser la température de chaque conteneur sans causer de chocs thermiques susceptibles d'endommager ce dernier,
c) réitérer l'étape b) jusqu'à abaisser progressivement la température de chaque conteneur à une température inférieure à la température de cuisson du produit alimentaire tout en contrôlant en temps réel la pression dans l'autoclave par injection d'un flux gazeux sous pression à l'intérieur de l'autoclave pour établir une contrepression ou par actionnement d'une vanne de purge de l'autoclave.

13. Système de conditionnement pour la mise en oeuvre du procédé de conditionnement d'un produit alimentaire selon l'une quelconque des revendications 1 à 12, comprenant au moins :
- un dispositif de mélange,
- une unité de pompage pour mettre sous vide l'espace intérieur dudit dispositif de mélange,
ledit système étant **caractérisé en ce que** ladite unité de pompage est configurée pour atteindre une pression absolue dans ledit dispositif de mélange inférieure à 30 mbars, et encore mieux comprise entre 10 et 25 mbars,
et **en ce qu'**il comporte en outre :
- une enceinte de réception d'un conteneur et de son couvercle, ces derniers étant rigides, cette enceinte étant reliée à des moyens de mise en dépression de celle-ci et comprenant des moyens de maintien magnétique du couvercle au-delà de l'orifice du conteneur correspondant pour permettre l'échappement des gaz contenus dans ce conteneur, ladite enceinte étant équipée d'un ou plusieurs capteurs de mesure émettant chacun des signaux de mesure,
- un autoclave de stérilisation équipé d'un ou plusieurs capteurs de mesure émettant chacun des signaux de mesure,
- une unité centrale de commande recevant lesdits signaux de mesure pour contrôler en temps réel des paramètres physiques tels que la pression et la température, dans l'enceinte et/ou dans chaque conteneur et/ou dans l'autoclave,
- un ou plusieurs dispositif(s) de mesure introduit(s) dans au moins un conteneur, chaque dispositif de mesure comportant des moyens de communication pour émettre la ou les mesure(s) réalisée(s) sous la forme de signaux de communication, l'unité centrale de commande permettant de contrôler des paramètres physiques dans l'enceinte et dans chaque conteneur.

14. Système de conditionnement selon la revendication 13, **caractérisé en ce que** cet autoclave est équipé d'un système de douche pour envoyer au moins un jet d'un liquide sur le conteneur après pasteurisation ou stérilisation de son contenu afin de le refroidir, cet autoclave comportant un ensemble d'introduction d'un flux gazeux sous pression à l'intérieur de l'autoclave pour établir une contrepression et/ou une vanne de purge de l'autoclave commandée à distance.

15. Système de conditionnement selon la revendication 13 ou 14, **caractérisé en ce que** cet autoclave comporte un système de récupération d'une partie au moins du liquide introduit dans l'autoclave, celle-ci étant rebouclée au moins en partie sur le système de douche pour être introduite de nouveau dans l'autoclave après mélange avec un liquide à une température inférieure contenu dans un réservoir de stockage, ledit système comportant au moins un dispositif de mesure pour mesurer le débit et la température du liquide ainsi récupéré afin de déterminer le volume de liquide à réinjecter à une température inférieure.

## Patentansprüche

1. Verfahren zum Verpacken eines Nahrungsmittelprodukts, bei dem die folgenden aufeinander folgenden Schritte ausgeführt werden:
a) Einführen dieses Nahrungsmittelprodukts und eines oder mehrerer Additive in eine Mischvorrichtung,
b) Beaufschlagen dieser Mischvorrichtung mit Unterdruck und Mischen ihres Inhalts, um einerseits eine Penetration des oder der Additive in das Nahrungsmittelprodukt sicherzustellen und andererseits das so gebildete Gemisch zu entgasen,
c) Verpacken mindestens eines Teils des so kalt gewaschenen Gemisches in mindestens einem Behälter;
wobei das Verfahren **dadurch gekennzeichnet ist, dass** der Schritt des Beaufschlagens der Mischvorrichtung mit Unterdruck und des Mischens ihres Inhalts, um einerseits eine Penetration des oder der Additive in das Nahrungsmittelprodukt sicherzustellen und andererseits das so gebildete Gemisch zu entgasen, bis zu einem Absolutdruck ausgeführt wird, der niedriger oder gleich 30 mbar ist,
und dass in Schritt c), wenn das Gemisch eine Temperatur hat, die niedriger ist als die Siedetemperatur des Wassers bei dem Druck, der eingesetzt wird, um dieses Gemisch mit Unterdruck aufzubereiten, wobei der Druck, der eingesetzt wird, um dieses Gemisch mit Unterdruck aufzubereiten, gleich oder niedriger als 30 mbar ist, mindestens ein Teil des so kalt gewaschenen Gemisches in mindestens einem Behälter bei Unterdruck verpackt wird,
und dass, nachdem ein identischer oder im Wesentlichen identischer Teil dieses Gemisches, die eine Charge definieren, in mehrere starre Behälter eingeführt wurde, in mindestens einen dieser Behälter eine oder mehrere Messvorrichtungen eingeführt werden, um einen oder mehrere Prüfbehälter zu definieren, wobei jede Messvorrichtung Kommunikationsmittel umfasst, um die ausgeführte Messung oder die ausgeführten Messungen in Form von Kommunikationssignalen auszusenden, und dass, wenn die Charge in eine Unterdruckkammer gegeben wird, auch in diese Unterdruckkammer, die mit Mitteln, um darin Unterdruck zu erzeugen, verbunden ist, eine oder mehrere Messvorrichtungen mit Kommunikationsmitteln eingeführt werden, um die ausgeführte Messung oder die ausgeführten Messungen in Form von Kommunikationssignalen auszusenden, um in Echtzeit die Druckdifferenz und die Temperatur in jedem Behälter der Charge zu bestimmen und somit die Überwachung des Verpackens dieser Charge zu ermöglichen.

2. Verfahren nach Anspruch 1, **dadurch gekennzeichnet, dass** in Schritt a) das Nahrungsmittelprodukt und das oder die Additive in ein Butterfass eingeführt werden, das mit einer Unterdruckerzeugungsvorrichtung ausgestattet ist.

3. Verfahren nach Anspruch 1 oder 2, **dadurch gekennzeichnet, dass** Schritt b) während einer minimalen Dauer t ausgeführt wird, die die Zerstörung des Hauptteils der nicht sporenbildenden Bakterienbelastung sicherstellt, die jedem Nahrungsmittelprodukt eigen ist.

4. Verfahren nach einem der Ansprüche 1 bis 3, **dadurch gekennzeichnet, dass** vor Schritt b) die Temperatur des Nahrungsmittelprodukts eine Temperatur hat, die höher ist als die Siedetemperatur des Wassers für den Druck der Unterdruckerzeugung.

5. Verfahren nach einem der Ansprüche 1 bis 4, **dadurch gekennzeichnet, dass** am Ende von Schritt b) das so gebildete Gemisch auf einem Absolutdruck zwischen 10 und 25 mbar liegt.

6. Verfahren nach einem der Ansprüche 1 bis 5, **dadurch gekennzeichnet, dass** in Schritt c) nach der Einführung mindestens eines Teils des Gemisches in mindestens einen starren Behälter eine Imprägnierungsflüssigkeit auf der Basis von Wasser in jeden Behälter zugegeben wird, wobei die Menge der zugegebenen Imprägnierungsflüssigkeit nur gleich der Menge ist, die erforderlich ist, um eine Sättigungsdampfatmosphäre in jedem Behälter zu bilden, um den Wärmeaustausch durch Verdampfung oder Kondensation bei dem Absolutdruck sicherzustellen, der in jedem Behälter nach dem Verschließen herrscht.

7. Verfahren nach Anspruch 6, **dadurch gekennzeichnet, dass** die so zugegebene Flüssigkeit weniger als fünfzehn Gewichtsprozent und noch besser weniger als fünf Gewichtsprozent des Gesamtgewichts des so in jeden Behälter eingeführten Teils darstellt.

8. Verfahren nach einem der Ansprüche 1 bis 7, **dadurch gekennzeichnet, dass** für einen zerbrechlichen Bestandteil oder ein zerbrechliches Additiv oder zerbrechliche Bestandteile oder Additive, die in Schritt c) zugegeben werden müssen, vor diesem letzten Schritt nur dieser oder diese Bestandteile oder Additive in die Mischvorrichtung eingeführt werden und dieses oder diese einzigen Elemente bis zu einem Absolutdruck entgast werden, der geringer als oder gleich 30 mbar ist, wobei diese vorher auf eine Temperatur gesetzt wurden, die geringer ist als + 10 °C, und noch besser zwischen -1 °C und +5 °C liegt, um die Verflüchtigung von bestimmten Komponenten mit aromatischer Funktion zu vermeiden.

9. Verfahren nach Anspruch 1, **dadurch gekennzeichnet, dass** jeder Behälter ein starrer Behälter ist, wobei in Schritt c) die folgenden Schritte ausgeführt werden:
a) für jeden Behälter mit mindestens einem derartigen Teil Anordnen dieses Behälters mit einem Deckel mit einer Dichtung in einer Unterdruckkammer, die mit Mitteln zur Unterdruckerzeugung in dieser verbunden ist,
b) Halten des Deckels über der Öffnung des entsprechenden Behälters durch magnetische Mittel, um das Entweichen der in diesem Behälter enthaltenen Gase zu ermöglichen,
c) fortschreitendes Beaufschlagen der Unterdruckkammer mit Unterdruck, um eine Unterdruckerzeugung im Behälter auf einem Absolutdruck sicherzustellen, der niedriger oder gleich 30 mbar ist, wobei dieser Fortschritt gemäß dem überwachten Wert des Absolutdrucks und der Art des Inhalts dieses Behälters bestimmt wird,
d) Drücken des Deckels auf die Öffnung des Behälters, um seine Dichtung gegen die Öffnung des Behälters zu pressen,
e) Beaufschlagen der Unterdruckkammer mit Atmosphärendruck, dann Abbauen des auf den Deckel ausgeübten Drucks, wobei die Verbindung zwischen den magnetischen Mitteln und dem Deckel unterbrochen wird.

10. Verfahren nach einem der vorangehenden Ansprüche, **dadurch gekennzeichnet, dass**, nachdem ein gegebener Behälter mit einem Deckel durch Unterdruckerzeugung hermetisch geschlossen wurde, die folgenden zusätzlichen Schritte ausgeführt werden:
- Bringen des Inhalts dieses Behälters auf eine Temperatur zur thermischen Verarbeitung, die höher als oder gleich einer Schwellentemperatur zur Pasteurisierung oder Sterilisation ist, während einer Aussetzungsdauer T, während in kontinuierlicher Weise einerseits die Temperatur und der Druck, die in diesem Behälter herrschen, und andererseits der Umgebungsdruck zu diesem Behälter gesteuert werden, um jegliches ungewolltes Öffnen von diesem während der thermischen Verarbeitung und jegliche Zersetzung der Struktur des in diesem Behälter enthaltenen Teils und/oder des Behälters selbst zu vermeiden, dann
- Abkühlen seines Inhalts auf eine Temperatur, die geringer ist als die Kochtemperatur des Nahrungsmittelprodukts.

11. Verfahren nach Anspruch 10, **dadurch gekennzeichnet, dass** die Abkühlung seines Inhalts durch Aussetzung des Behälters mindestens einem Strahl einer Flüssigkeit, vorzugsweise unmittelbar am Ende der Aussetzungsdauer T, erhalten wird.

12. Verfahren nach Anspruch 10 oder 11, **dadurch gekennzeichnet, dass** die folgenden aufeinander folgenden Schritte ausgeführt werden, um jeden Behälter abzukühlen:
a) nach dem Spülen des Luftvolumens, das im Autoklaven enthalten ist, Aussetzen jedes Behälters mindestens einem Strahl einer Flüssigkeit mit der Verarbeitungstemperatur,
b) Wiedergewinnen zumindest eines Teils der so in den Autoklaven eingeführten Flüssigkeit und Mischen von dieser mit einer kalten Flüssigkeit, um die Temperatur jedes Behälters abzusenken, ohne Wärmeschocks zu verursachen, die diesen letzteren beschädigen können,
c) Wiederholen von Schritt b), bis fortschreitend die Temperatur jedes Behälters auf eine Temperatur abgesenkt ist, die geringer ist als die Kochtemperatur des Nahrungsmittelprodukts, während in Echtzeit der Druck im Autoklaven durch Einleiten eines Gasflusses unter Druck in das Innere des Autoklaven, um einen Gegendruck aufzubauen, oder durch Betätigung eines Spülventils des Autoklaven, gesteuert wird.

13. System zum Verpacken für die Ausführung des Verfahrens zum Verpacken eines Nahrungsmittelprodukts nach einem der Ansprüche 1 bis 12, das mindestens Folgendes umfasst:
- eine Mischvorrichtung,
- eine Pumpeinheit, um den Innenraum der Mischvorrichtung mit Unterdruck zu beaufschlagen,
wobei das System **dadurch gekennzeichnet ist, dass** die Pumpeinheit dazu konfiguriert ist, einen Absolutdruck in der Mischvorrichtung zu erreichen, der geringer ist als 30 mbar, und besser zwischen 10 und 25 mbar liegt,
und dass es außerdem Folgendes umfasst:
- eine Unterdruckkammer zum Aufnehmen eines Behälters und seines Deckels, wobei diese letzteren starr sind, wobei diese Unterdruckkammer mit Mitteln zur Unterdruckerzeugung in dieser verbunden ist und Mittel zum magnetischen Halten des Deckels über der Öffnung des entsprechenden Behälters umfasst, um das Entweichen der in diesem Behälter enthaltenen Gase zu ermöglichen, wobei die Unterdruckkammer mit einem oder mehreren Messsensoren ausgestattet ist, die jeweils Messsignale aussenden,
- einen Sterilisationsautoklaven, der mit einem oder mehreren Messsensoren ausgestattet ist, die jeweils Messsignale aussenden,
- eine zentrale Steuereinheit, die die Messsignale empfängt, um in Echtzeit physikalische Parameter wie den Druck und die Temperatur in der Unterdruckkammer und/oder in jedem Behälter und/oder im Autoklaren zu steuern,
- eine oder mehrere Messvorrichtungen, die in mindestens einen Behälter eingeführt werden, wobei jede Messvorrichtung Kommunikationsmittel umfasst, um die ausgeführte(n) Messung(en) in Form von Kommunikationssignalen auszusenden, wobei die zentrale Steuereinheit es ermöglicht, physikalische Parameter in der Unterdruckkammer und in jedem Behälter zu steuern.

14. System zum Verpacken nach Anspruch 13, **dadurch gekennzeichnet, dass** dieser Autoklav mit einem Duschsystem ausgestattet ist, um mindestens einen Strahl einer Flüssigkeit auf den Behälter nach der Pasteurisierung oder Sterilisation seines Inhalts zu schicken, um ihn abzukühlen, wobei dieser Autoklav eine Baugruppe zur Einführung eines Gasflusses unter Druck in das Innere des Autoklaven, um einen Gegendruck aufzubauen, und/oder ein Spülventil des Autoklaven, das ferngesteuert wird, umfasst.

15. System zum Verpacken nach Anspruch 13 oder 14, **dadurch gekennzeichnet, dass** dieser Autoklav ein System zur Wiedergewinnung zumindest eines Teils der in den Autoklaven eingeführten Flüssigkeit umfasst, wobei dieser zumindest teilweise zum Duschsystem zurückgeführt wird, um nach dem Mischen mit einer Flüssigkeit mit einer geringeren Temperatur, die in einem Lagerreservoir enthalten ist, erneut in den Autoklaven eingeführt zu werden, wobei das System mindestens eine Messvorrichtung umfasst, um den Durchsatz und die Temperatur der so wiedergewonnenen Flüssigkeit zu messen, um das mit einer geringeren Temperatur erneut einzuspeisende Flüssigkeitsvolumen zu bestimmen.

## Claims

1. Method for packaging of a food product, in which one carries out the following successive steps:
a) place this food product and one or more additives in a mixing device,
b) evacuate this mixing device and mix its contents on the one hand to ensure a penetration of the additive (s) in the food product and on the other hand to outgas the mixture so formed,
c) package at least a portion of the mixture cold blanched in this way in at least one container;
said method being **characterized in that** the step of evacuating the mixing device and mixing its contents on the one hand to ensure a penetration of the additive (s) in the food product and on the other hand to outgas the mixture so formed, is carried out until an absolute pressure less than or equal to 30 mbars is reached,
**in that**, in step c), said mixture being at a temperature less than the boiling temperature of water at the pressure used for vacuum packaging of this mixture, said pressure used for vacuum packaging this mixture being equal to or less than 30 mbars, one vacuum packages at least a portion of the mixture cold blanched in this way in at least one container,
and **in that**, having introduced an identical or essentially identical portion of this mixture into a plurality of rigid containers, which define a batch, one introduces into at least one of these containers one or more measurement devices to define one or more control containers, each measurement device comprising means of communication to put out the measurement (s) performed in the form of communication signals, and **in that** having placed said batch in an enclosure, one also introduces into this enclosure, which is connected to means for reducing its pressure, one or more measurement devices comprising means of communication to put out the measurement(s) performed in the form of communication signals, so as to determine in real time the differential pressure and the temperature in each container of said batch and thus enable the monitoring of the packaging of this batch.

2. Method according to Claim 1, **characterized in that**, in step a), said food product and the additive(s) are placed in a churn outfitted with an evacuating device.

3. Method according to Claim 1 or 2, **characterized in that** step b) is carried out for a minimum time t ensuring the destruction of the majority of the nonsporulated bacterial burden peculiar to each food product.

4. Method according to any one of Claims 1 to 3, **characterized in that** before step b) the temperature of the food product is at a temperature greater than the boiling temperature of water for the evacuation pressure.

5. Method according to any one of Claims 1 to 4, **characterized in that** at the end of step b) the mixture so formed is at an absolute pressure between 10 and 25 mbars.

6. Method according to any one of Claims 1 to 5, **characterized in that** in step c), after introducing at least a portion of said mixture in at least one rigid container, a water-based impregnation liquid is added in each container, the quantity of impregnation liquid added being equal to only the quantity required to form a saturating vapour atmosphere in each container so as to ensure heat exchanges by evaporation or condensation at the absolute pressure prevailing in each container after its closure.

7. Method according to Claim 6, **characterized in that** the liquid so added represents less than fifteen percent by weight, and even better less than five percent by weight of the total weight of the portion so introduced into each container.

8. Method according to any one of Claims 1 to 7, **characterized in that**, for one or more fragile ingredients or additives, before being added during step c), one introduces, prior to this latter step, this or these ingredients or additives alone into said mixing device and outgasses this or these elements alone down to an absolute pressure less than or equal to 30 mbars, these having been previously placed at a temperature lower than +10° C, and even better between -1° C and +5° C, in order to prevent the volatilization of certain constituents of aromatic function.

9. Method according to Claim 1, **characterized in that**, each container being a rigid container, in step c) one performs the following steps:
a) for each container comprising at least one such portion, place this container with a cover having a tightness seal in an enclosure connected to means for reducing its pressure,
b) maintain the cover away from the orifice of the corresponding container by magnetic means so as to allow the escape of gases contained in this container,
c) progressively place the enclosure under vacuum to ensure an evacuation of the container to an absolute pressure less than or equal to 30 mbars, this progressivity being determined according to the aforesaid absolute pressure value and the nature of the content of this container,
d) place the cover over the opening of the container so as to compress its tightness seal against the orifice of the container,
e) place the enclosure at atmospheric pressure, then release the pressure exerted on the cover, the connection between the magnetic means and the cover being broken.

10. Method according to any one of the preceding claims, **characterized in that**, having hermetically closed a given container with a cover by reduced pressure, one performs the following supplemental steps:
- bring the content of this container up to a heat treatment temperature greater than or equal to a threshold temperature of pasteurization or sterilization for an exposure time T while continually checking, on the one hand, the temperature and the pressure prevailing in this container, and on the other hand the pressure around this container, so as to prevent any early opening thereof during the heat treatment and any degradation of the structure of the portion contained in this container and/or of the container itself, then
- cool its contents to a temperature below the cooking temperature of the food product.

11. Method according to Claim 10, **characterized in that** the cooling down of its contents is achieved by exposing the container to at least one jet of a liquid, preferably immediately at the end of the exposure time T.

12. Method according to Claim 10 or 11, **characterized in that** one performs the following successive steps to cool down each container:
a) after purging the volume of air contained in the autoclave, expose each container to at least one jet of a liquid at the treatment temperature,
b) recover at least some of the liquid thus introduced into the autoclave and mix this with a cold liquid to lower the temperature of each container without causing thermal shocks liable to damage the latter,
c) repeat step b) until the temperature of each container is progressively lowered to a temperature less than the cooking temperature of the food product while monitoring in real time the pressure in the autoclave by injection of a pressurized gas flow inside the autoclave to establish a back pressure or by actuating a purge valve of the autoclave.

13. Packaging system for the implementing of the method for packaging of a food product according to any one of Claims 1 to 12, comprising at least:
- a mixing device,
- a pumping unit to evacuate the interior space of said mixing device,
said system being **characterized in that** said pumping unit is configured to attain an absolute pressure in said mixing device less than 30 mbars, and even better between 10 and 25 mbars,
and **in that** it also comprises:
- a receiving enclosure for a container and its cover, these latter being rigid, this enclosure being connected to means for reducing its pressure and comprising means of magnetic holding of the cover away from the orifice of the corresponding container to allow the escape of gases contained in this container, said enclosure being outfitted with one or more measurement sensors each one putting out measurement signals,
- a sterilization autoclave outfitted with one or more measurement sensors each one putting out measurement signals, and
- a central control unit receiving said measurement signals to monitor in real time physical parameters such as the pressure and the temperature, in the enclosure and/or in each container and/or in the autoclave,
- one or more measurement devices introduced in at least one container, each measurement device comprising means of communication to put out the measurement (s) performed in the form of communication signals, the central control unit making it possible to monitor physical parameters in the enclosure and in each container.

14. Packaging system according to Claim 13, **characterized in that** this autoclave is equipped with a shower system to direct at least one jet of a liquid onto the container after pasteurization or sterilization of its contents in order to cool it down, this autoclave comprising an assembly for introduction of a pressurized gas flow inside the autoclave to establish a back pressure and/or a remote controlled purge valve of the autoclave.

15. Packaging system according to Claim 13 or 14, **characterized in that** this autoclave comprises a system for recovery of at least part of the liquid introduced into the autoclave, said park being recycled at least partly to the shower system to be introduced once more into the autoclave after mixing with a liquid at a lower temperature contained in a storage tank, said system comprising at least one measurement device to measure the flow rate and the temperature of the liquid so recovered in order to determine the volume of liquid to be reinjected at a lower temperature.
